## Europäisches Patentamt
## European Patent Office
## Office européen des brevets

(19)

(11) Veröffentlichungsnummer: **0 170 238**
**A2**

(12)

# EUROPÄISCHE PATENTANMELDUNG

(21) Anmeldenummer: 85109484.7

(22) Anmeldetag: 27.07.85

(51) Int. Cl.⁴: **B 60 J 1/20**

(30) Priorität: 02.08.84 DE 3428612

(43) Veröffentlichungstag der Anmeldung:
05.02.86 Patentblatt 86/6

(84) Benannte Vertragsstaaten:
AT BE CH DE FR GB IT LI NL SE

(71) Anmelder: Mangold, Anton
Amselstrasse 4
D-8100 Garmisch-Partenkirchen(DE)

(72) Erfinder: Mangold, Anton
Amselstrasse 4
D-8100 Garmisch-Partenkirchen(DE)

(74) Vertreter: Weber, Otto Ernst, Dipl.-Phys.
Hofbrunnstrasse 36
D-8000 München 71(DE)

(54) Zusatzscheibe für ein Seitenfenster eines Fahrzeuges.

(57) Eine Zusatzscheibe für ein Seitenfenster eines Fahrzeuges ist am oder im Rahem des Seitenfensters derart befestigbar, daß es einen oberen Abschnitt der Fensteröffnung abdeckt, während bei teilgeöffnetem Fenster ein vorderer Abschnitt der Fensteröffnung zur Entlüftung des Fahrzeuginnenraumes freigegeben wird.

FIG. 1

EP 0 170 238 A2

Croydon Printing Company Ltd.

Die Erfindung betrifft eine Zusatzscheibe für ein
Seitenfenster eines Fahrzeuges gemäß dem Oberbegriff
des Hauptanspruches und der Nebenansprüche.

Zur Belüftung des Innenraumes eines Kraftfahrzeuges sind
die in den Fahrzeugtüren angeordneten Seitenfenster in
der Regel höhenverstellbar gelagert. Die Seitenfenster
werden zur Belüftung des Fahrzeuges in den Türkörper
mittels einer Kurbel oder automatisch eingefahren.

Insbesondere bei höheren Fahrtgeschwindigkeiten haben geöffnete Seitenfenster den Nachteil, daß im Fahrzeuginnenraum Zugluft entsteht und eine erhebliche Lärmentwicklung zu verzeichnen ist. Dieser Lärm wird u.a. durch
die Windgeräusche an der Fahrzeugkarosserie sowie durch
das Abrollen der Reifen auf der Straße verursacht.

Der Erfindung liegt die Aufgabe zugrunde, eine Zusatzscheibe der eingangs genannten Art zu schaffen, mit
welcher der Innenraum eines Fahrzeuges möglichst zugfrei,
geräuscharm und wirkungsvoll zu be- und entluften ist.

Gemäß der Erfindung wird diese Aufgabe dadurch gelöst,
daß die Zusatzscheibe am oder im Rahmen eines nach vorne
abgeschrägten Seitenfensters derart befestigbar ist, daß
sie einen oberen Abschnitt der Fensteröffnung abdeckt.

Diese erfindungsgemäße Anordnung der Zusatzscheibe hat
bei einem Seitenfenster, welches in Fahrtrichtung nach
vorne einen auslaufenden Teil mit einer zur Fahrtrichtung
schrägen Oberkante aufweist, zur Folge, daß beim Herunter-

0170238

bewegen der Fensterscheibe oberhalb der schrägen Vorderkante im vorderen Bereich des Fensters ein Spalt geöffnet wird, während die Zusatzscheibe den mittleren
und hinteren Teil der Fensteröffnung trotz teilweise
herunterbewegter Fensterscheibe abdeckt. Somit entsteht
nur im vorderen Bereich der Fensteröffnung ein wirksamer Luftspalt für die Entlüftung des Fahrzeuges,
während im mittleren und hinteren Abschnitt die Fensteröffnung weiterhin im wesentlichen abgedeckt bleibt.

Es hat sich überraschenderweise gezeigt, daß eine derartig
angeordnete Zusatzscheibe, welche nur im vorderen Abschnitt der Fensteröffnung einen Spalt freigibt, die
Geräuschentwicklung im Fahrzeuginnenraum wesentlich
reduziert. Gleichzeitig bewirkt der am Öffnungsspalt
außenseitig entstehende Sog eine wirkungsvolle Entlüftung des Fahrzeuges, wobei die Zufuhr von Frischluft in
den Fahrzeuginnenraum im wesentlichen nicht über die
Seitenfensteröffnungen, sondern über die übrigen Ventilationseinrichtungen erfolgt.

Der Erfindung liegt also die Erkenntnis zugrunde, daß sich
die Zugluft und die Geräuschentwicklung im Fahrzeuginnenraum bei geöffnetem Seitenfenster wesentlich dadurch reduzieren lassen, daß die Öffnung ausschließlich auf einen
begrenzten, in Fahrtrichtung vorne angeordneten Abschnitt
der gesamten Seitenfensteröffnung beschränkt ist, wobei
die erfindungsgemäße Zusatzscheibe den mittleren und rückwärtigen Abschnitt der Fensteröffnung auch bei herunterbewegter Fensterscheibe weiterhin abdeckt.

Die erfindungsgemäße Zusatzscheibe kann zusätzlich am
in Fahrtrichtung hinteren Abschnitt als Winkelstück
ausgebildet sein, wodurch sich bessere Befestigungsmöglichkeiten am oder im Fensterrahmen ergeben und
wodurch die Gesamtstabilität der Zusatzscheibe wesentlich erhöht wird.

Eine besonders vorteilhafte Ausgestaltung der Zusatzscheibe sieht vor, daß der in Fahrtrichtung vordere
Teil der Zusatzscheibe keilförmig ausgebildet ist
derart, daß bei teilweise geöffnetem Fenster in der
Stellung, in welcher sich die Unterkante der Zusatzscheibe
und die Oberkante der Fensterscheibe nur noch geringfügig
überlappen, die Vorderante des vorderen Abschnittes der
Fensterscheibe und die Vorderkante des vorderen Teiles der
Zusatzscheibe im wesentlichen in einer Linie liegen.
Daraus ergeben sich die wesentlichen Vorteile, daß einerseits die vordere Spaltöffnung des Fensters zur Entlüftung
des Fahrzeuginnenraumes einen sehr großen Querschnitt aufweist, und daß andererseits durch die Zusatzscheibe der
mittlere und hintere Teil der Fensteröffnung, durch welche
vorwiegend die Außengeräusche in den Fahrzeuginnenraum
eindringen könnten, so weit wie möglich abgedeckt werden.

Eine ähnliche Wirkung kann dadurch erzielt werden, daß die
erfindungsgemäße Zusatzscheibe in ihrem in Fahrtrichtung
vorderen Abschnitt eine Öffnung aufweist, die sich möglichst weit nach vorne erstreckt und deren hintere Begrenzungskante im teilgeöffneten Zustand des Fensters,
in dem sich die Oberkante der Fensterscheibe und die
Unterkante der Zusatzscheibe gerade noch überlappen, mit der Vorderkante des nach vorne abgeschrägten Abschnittes der Fensterscheibe im wesentlichen in einer Linie liegt.

Für ein hinteres Seitenfenster eines Fahrzeuges, bei dem kein nach vorne abgeschrägter Abschnitt des Seitenfensters vorgesehen ist, wird die der Erfindung gestellte Aufgabe dadurch gelöst, daß die Zusatzscheibe am oder im Rahmen des Seitenfensters derart befestigbar ist, daß sie einen oberen Abschnitt der Fensteröffnung abdeckt und in ihrem in Fahrtrichtung vorderen Abschnitt wenigstens eine Öffnung aufweist. Bei herunterbewegter Fensterscheibe stellt die im vorderen Abschnitt der Zusatzscheibe vorgesehene Öffnung eine Strömungsverbindung zwischen dem Innenraum des Fahrzeuges und der Außenluft her. Auch bei dieser Anordnung wird also nur ein begrenzter Abschnitt der Fensteröffnung freigegeben, und zwar derart, daß die mittleren und rückwärtigen Abschnitte der Fensteröffnung weiterhin durch die Zusatzscheibe abgedeckt bleiben, wenn die Fensterscheibe nicht weiter herunterbewegt wird, als die Vertikalerstreckung der Zusatzscheibe beträgt.

In einem bevorzugten Ausführungsbeispiel kann die Entlüftungswirkung dadurch erhöht werden, daß zwei im wesentlichen vertikal übereinander angeordnete Öffnungen vorgesehen sind.

Die erfindungsgemäßen Zusatzscheiben sowohl für das vordere Seitenfenster als auch für das hintere Seitenfenster eines Fahrzeuges haben den Vorteil, daß sie sich ohne Schwierigkeiten nachträglich in ein Fahrzeug
einbauen lassen. Hierzu sind die Zusatzscheiben mit
einer Randkontur versehen, welche an den jeweiligen Fahrzeugtyp derart angepaßt ist, daß die Zusatzscheiben
beispielsweise durch Kleben oder Stecken an der Innenseite des jeweiligen Fensterrahmens befestigbar sind.
Die erfindungsgemäßen Zusatzscheiben können weiterhin
so ausgebildet sein, daß sie in einfacher Weise unter
eine Schulter des Rahmens einsetzbar sind.

Um die Sicht der Insassen nicht zu behindern, können die
Zusatzscheiben glasklar oder zum Schutz gegen die Sonneneinstrahlung oder gegen Lichtblendungen farblich getönt
sein.

Die der Erfindung gestellte Aufgabe kann für die vorderen
Seitenfenster eines Fahrzeuges auch dadurch gelöst werden,
daß die Zusatzscheibe von einem oberen Holm des Seitenfensterrahmens gebildet ist, wobei der obere Holm breiter als der
vordere Holm des Rahmens ausgebildet ist, so daß er bei
teilgeöffnetem Fenster einen oberen Abschnitt der Fensteröffnung abdeckt. Auch bei diesem Ausführungsbeispiel wird
zwischen dem vorderen Holm des Fensterrahmens und der
Oberkante eines vorderen Abschnitts der Fensterscheibe ein
Öffnungsspalt freigegeben, durch welchen der Fahrzeuginnenraum zugfrei und geräuscharm entlüftet werden kann. Der verbreiterte obere Holm des Rahmens verhindert dabei, daß übermäßige Geräusche entstehen oder in den Fahrzeuginnenraum
eindringen, und daß die im Fahrzeuginnenraum befindlichen
Personen von Zugluft belästigt werden.

0170238

Die erfindungsgemäßen Zusatzscheiben sind vorzugsweise innenseitig angeordnet. Dadurch wird das Strömungsprofil an der Außenhaut des Fahrzeuges nicht beeinträchtigt. Außerdem ergeben sich durch die innenseitige Anordnung bessere Befestigungsmöglichkeiten für die Zusatzscheiben am Fensterrahmen und die Zusatzscheiben können bei Fahrt nicht leicht aus ausbeulen und so den Schließvorgang des Seitenfensters behindern.

Die Unterkanten der Zusatzscheiben werden vorzugsweise so ausgelegt, daß sie sich in etwa parallel zur Oberkante der Fensterscheibe erstrecken. Die Wirkung der Zusatzscheiben ist jeweils in der Stellung am größten, in der die Fensterscheibe soweit herunterbewegt ist, daß sich ihre Oberkante mit der jeweiligen Unterkante der Zusatzscheibe gerade noch überlappt.

Da die Zusatzscheiben relativ dünn ausgebildet sein können, ist es denkbar, daß sie bei größeren Fahrtgeschwindigkeiten aufgrund des von außen wirkenden Soges auswärts gebeult werden, so daß beim Schließen der Fensterscheibe die Oberkante derselben jeweils gegen die Unterkante der Zusatzscheibe anstoßen kann. Um ein solches Ausbeulen und Anstoßen zu verhindern, ist in einer bevorzugten Ausgestaltung der Erfindung vorgesehen, daß jeweils an der Unterkante einer Zusatzscheibe ein von der Fensterscheibe abstehender Wulst angebracht ist.

Bei genügend steifer Ausbildung der Zusatzscheiben kann es auch genügen, daß jeweils die Außenfläche einer Zusatzscheibe eine größere Höhenerstreckung aufweist als die der Fensterscheibe benachbarte Innenfläche der Zusatzscheibe, so daß beim Einfahren des voll geöffneten Fensters in die geschlossene Stellung der Übergang der
Oberkante der Fensterscheibe unter die Zusatzscheibe
erleichtert wird.

Die Erfindung wird nachfolgend anhand der Zeichnung
näher beschrieben. Dabei zeigen:

Fig. 1    erfindungsgemäße Zusatzscheiben sowohl
          für das vordere als auch für das rückwärtige
          Seitenfenster eines Kraftfahrzeuges;

Fig. 2    abgewandelte Ausführungsbeispiele von Zusatzscheiben entsprechend Fig. 1;

Fig. 3    eine Zusatzscheibe mit Winkelstück und keilförmigem vorderem Abschnitt;

Fig. 4    einen Schnitt entlang der Linie I-I der
          Fig. 3;

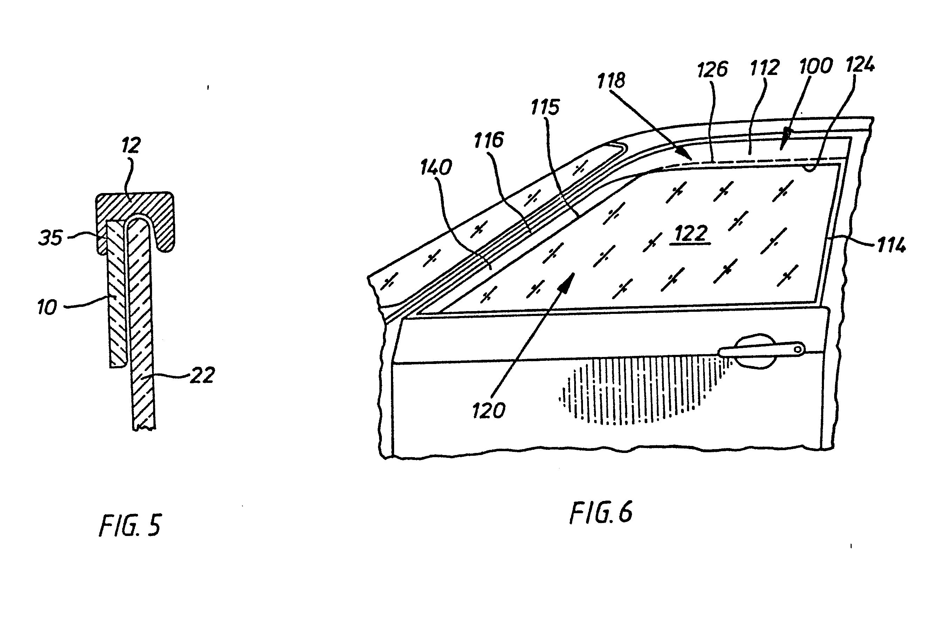

Fig. 5    einen Vertikalschnitt durch ein weiteres Ausführungsbeispiel einer Zusatzscheibe, ähnlich

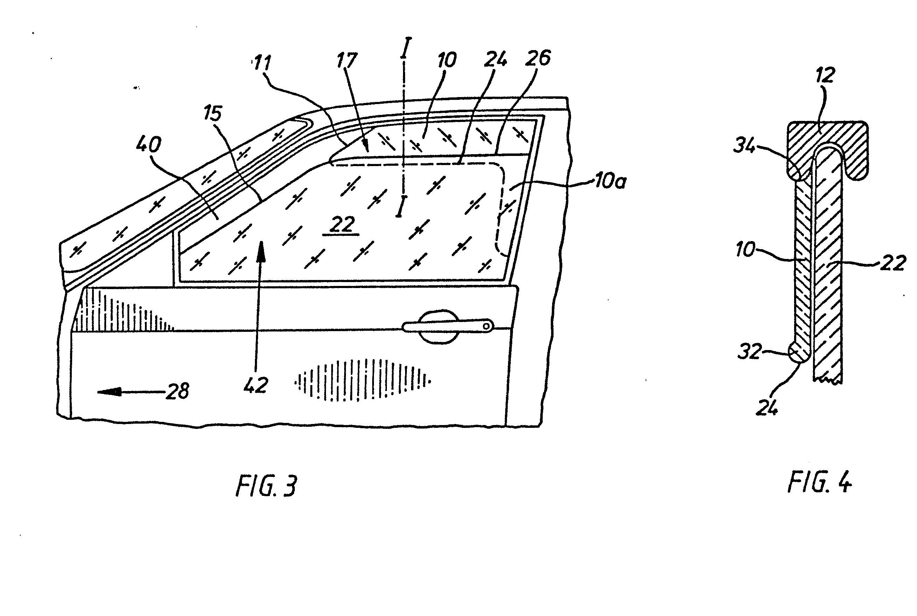

          Fig.4 und

Fig. 6    eine erfindungsgemäße Zusatzscheibe als Verbreiterung des oberen Holmes des Fensterrahmens.

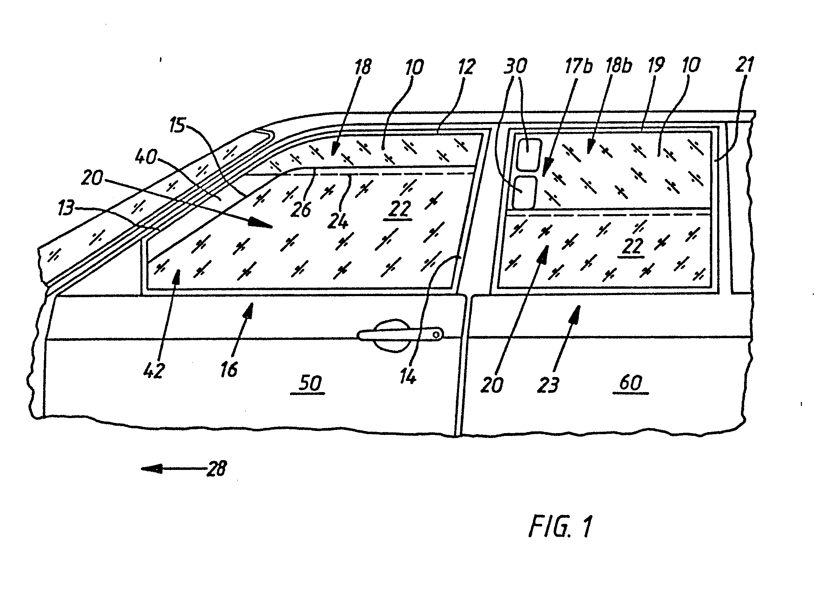

Figur 1 zeigt einen Ausschnitt eines Kraftfahrzeuges
mit einer Vordertür 50 und einer Hintertür 60. Das Seitenfenster 16 in der Vordertür 50 ist mit einer herkömmlichen,
versenkbaren Fensterscheibe 22 versehen. Bei im Türkörper
versenkter Fensterscheibe 22 wird die Fensteröffnung 20
im Rahmen 12,14 freigegeben. Im oberen Abschnitt der
Fensteröffnung 20 ist eine Zusatzscheibe 10 derart angeordnet, daß die Unterkante 24 der Zusatzscheibe 10 etwa
parallel zur Oberkante 26 der Fensterscheibe 22 verläuft.

Die Fensterscheibe 22 ist soweit herunterbewegt, daß sich
die Zusatzscheibe 10 und die Fensterscheibe 22 geringfügig überlappen. Da die Fensterscheibe 22 einen Abschnitt 42 aufweist, der in Fahrtrichtung 28 nach vorne
abgeschrägt ist, wird zwischen dem ebenfalls entsprechend
abgeschrägten Abschnitt 13 des oberen Rahmens 12 und der
Vorderkante 15 des Abschnittes 42 der Fensterscheibe 22
eine Öffnung 40 freigegeben, welche auf den vorderen Abschnitt der Fensteröffnung 20 beschränkt ist.

Diese Öffnung bewirkt eine gute Entlüftung des Fahrzeuginnenraumes, ohne daß die bei schneller Fahrt außen
entstehenden Geräusche in nennenswertem Umfang in den
Fahrzeuginnenraum eindringen können.

Dadurch, daß die Öffnung 40 auf den vorderen Abschnitt
der Fensteröffnung 20 beschränkt ist, ist auch die Luftströmung im Inneren des Fahrzeuges im wesentlichen auf
den vorderen Bereich in der Nähe der Windschutzscheibe
beschränkt, so daß die Personen im Fahrzeug nicht durch
Zugluft belästigt werden.

In Fig. 1 ist anhand des rückwärtigen Seitenfensters 22, welches zur Hintertür 60 des Fahrzeuges gehört, eine weitere Ausgestaltung der Erfindung gezeigt. Hier weist die Fensteröffnung keinen nach vorne schräg auslaufenden Abschnitt auf. Statt dessen sind in der Zusatzscheibe 10 in deren in Fahrtrichtung 28 vorne gelegenen Abschnitt 17b zwei Öffnungen 30 vorgesehen, welche bei teilweise herunterbewegter Fensterscheibe 22 freigegeben werden. Auch diese Öffnungen 30 erfüllen die vorteilhaften Eigenschaften des Spaltes 40 des vorderen Seitenfensters, so daß sie eine geräuscharme und zugfreie Belüftung des Innenraumes gewährleisten.

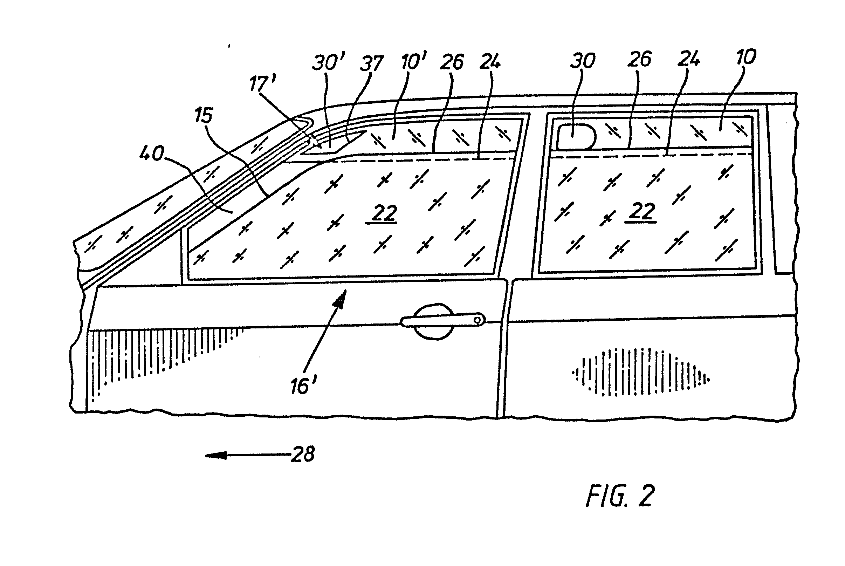

In Fig. 2 sind die in Fig.1 dargestellten Ausführungsbeispiele von erfindungsgemäßen Zusatzscheiben 10 derart abgewandelt, daß die zum vorderen, abgeschrägten Seitenfenster 16' gehörige Zusatzscheibe 10' mit einer Öffnung 30' im vorderen Abschnitt 17' versehen ist. Die Wirkung dieser zusätzlichen Öffnung 30' in der Zusatzscheibe 10' ist aus dem Vorstehenden ohne weiteres verständlich.

Beim rückwärtigen Seitenfenster 22 ist die Zusatzscheibe 10 gegenüber Fig.1 derart abgewandelt, daß anstelle der zwei Öffnungen 30 nunmehr nur eine Öffnung 30 vorgesehen ist.

In Fig. 3 ist eine Zusatzscheibe 10 mit einem Winkelstück 10a gezeigt. Das Winkelstück 10a ist am in Fahrtrichtung 28 hinteren Abschnitt der Zusatzscheibe 10 vorgesehen und erleichtert die Befestigung der Zusatzscheibe am oder im Fensterrahmen und erhöht die Gesamtstabilität der Zusatzscheibe 10.

Die Fensterscheibe 22 ist in diesem Ausführungsbeispiel
soweit heruntergedreht, daß sich die Oberkante 26 der
Fensterscheibe 22 und die Unterkante 24 der Fensterscheibe
10 gerade noch überlappen. Ein vorderer Teil 17 der Zusatzscheibe 10 ist in Fahrtrichtung keilförmig ausgebildet.
Die Vorderkante 11 des vorderen Teiles 17 der Zusatzscheibe
10 weist eine derartige Steigung auf, daß sie in der gezeigten Stellung, in welcher sich die Fensterscheibe 22
und die Zusatzscheibe 10 gerade noch überlappen, mit der
Vorderkante 15 des vorderen Abschnittes 42 der Fensterscheibe 22 gerade fluchtet. Dadurch wird die Öffnung 40
zur Entlüftung des Fahrzeuginnenraumes insgesamt sehr
groß und der mittlere Teil und der hintere Teil der
Fensteröffnung bleiben trotzdem soweit wie möglich abgedeckt.

Fig. 4 zeigt einen Schnitt entlang der Linie I-I der
Fig.3 und verdeutlicht, wie die Zusatzscheibe 10 planparallel zur Fensterscheibe 22 angeordnet ist. Die
Fensterscheibe 22 befindet sich dabei in geschlossenem
Zustand. Die Rand-Kontur 34 der Zusatzscheibe 10 ist dem
Rahmenabschnitt 12 des Fensters angepaßt, so daß die
Zusatzscheibe 10 auch nachträglich mit dem Rahmen verklebbar ist. An der Unterkante 24 ist die Zusatzscheibe 10
mit einem Wulst 32 versehen, welcher von der Fensterscheibe 22 abgekehrt ist, so daß die Fensterscheibe 22
beim Aufwärtsbewegen nicht gegen die Unterkante 24 anstößt, sondern sich frei nach oben bewegen kann.

In Fig. 5 ist ein Vertikalschnitt ähnlich wie in Fig. 4
gezeigt. Hierbei ist die Zusatzscheibe 10 unter eine
Schulter 35 des Rahmenabschnittes 12 eingepaßt. Die
Schulter 35 ist zur Aufnahme der Zusatzscheibe 10 bereits vorgefertigt.

Fig. 6 zeigt ein weiteres Ausführungsbeispiel der erfindungsgemäßen Zusatzscheibe 100. Hierbei ist der obere Holm 112 des Fensterrahmens 112,114,116 gegenüber dem vorderen Rahmenabschnitt 116 verbreitert ausgeführt. Nach dem Herunterbewegen der Fensterscheibe 122 soweit, daß sich die Oberkante 126 der Fensterscheibe 122 und die Unterkante 124 des oberen Holms 112 gerade noch überlappen, wird zwischen dem vorderen Holm 116 und der Vorderkante 115 der Fensterscheibe 122 eine Öffnung 140 freigegeben, während der verbreiterte obere Holm 112 den mittleren Teil und den hinteren Teil der Fensteröffnung noch abdeckt. Damit ergeben sich im wesentlichen die gleichen Vorteile wie bei den vorhergehend beschriebenen Ausführungsbeispielen der erfindungsgemäßen Zusatzscheibe.

Die in der vorstehenden Beschreibung, den Ansprüchen und der Zeichnung zum Ausdruck kommenden Merkmale der Erfindung können sowohl einzeln als auch in beliebiger Kombination für die Verwirklichung der Erfindung wesentlich sein.

0170238

## Ansprüche

1. Zusatzscheibe für ein Seitenfenster eines Fahrzeuges, insbesondere eines Kraftfahrzeuges, wobei das Seitenfenster eine Fensterscheibe mit einem in Fahrtrichtung nach vorne abgeschrägten Abschnitt und einen eine Fensteröffnung begrenzenden Rahmen zur Aufnahme der Fensterscheibe aufweist, dadurch g e k e n n z e i c h n e t , daß die Zusatzscheibe (10) am oder im Rahmen (12,14) des Seitenfensters (16) derart befestigbar ist, daß sie einen oberen Abschnitt (18) der Fensteröffnung (20) abdeckt.

2. Zusatzscheibe nach Anspruch 1, dadurch g e k e n n z e i c h n e t , daß ein in Fahrtrichtung hinterer Abschnitt der Zusatzscheibe (10) als Winkelstück (10a) ausgebildet ist,

3. Zusatzscheibe nach Anspruch 2, dadurch g e k e n n z e i c h n e t , daß ein vorderer Abschnitt (17) der Zusatzscheibe (10) in Fahrtrichtung (28) keilförmig ausgebildet ist derart, daß bei teilweise geöffnetem Fenster (20) in der Stellung, in welcher sich die Unterkante (24) der Zusatzscheibe (10) und die Oberkante (26) der Fensterscheibe (22) geringfügig überlappen, die Vorderkante (15) des nach vorne abgeschrägten Abschnittes (42) der Fensterscheibe (22) und die Vorderkante (11) des vorderen Abschnittes (17) der Zusatzscheibe (10) im wesentlichen in einer Linie liegen.

4. Zusatzscheibe nach Anspruch 2, dadurch g e k e n n z e i c h n e t , daß die Zusatzscheibe (10') in ihrem in Fahrtrichtung (28) vorderen Abschnitt (17') eine Öffnung (30') aufweist, deren Hinterkante (37) in teilgeöffnetem Zustand des Fensters in der Stellung, in welcher sich die Unterkante (24) der Zusatzscheibe (10') und die Oberkante (26) der Fensterscheibe (22) geringfügig überlappen, mit der Vorderkante (15) der Fensterscheibe (22) im wesentlichen in einer Linie liegt.

5. Zusatzscheibe für ein Seitenfenster eines Fahrzeuges, insbesondere eines Kraftfahrzeuges, wobei das Seitenfenster eine Fensterscheibe und einen eine Fensteröffnung begrenzenden Rahmen zur Aufnahme der Fensterscheibe aufweist, dadurch g e k e n n z e i c h n e t , daß die Zusatzscheibe (10) am oder im Rahmen (19,21) des Seitenfensters (23) derart befestigbar ist, daß sie einen oberen Abschnitt (18b) der Fensteröffnung (20) abdeckt und in ihrem in Fahrtrichtung vorderen Abschnitt (17b) wenigstens eine Öffnung (30) aufweist.

6. Zusatzscheibe nach einem der vorhergehenden Ansprüche, dadurch g e k e n n z e i c h n e t , daß die Zusatzscheibe (10, 10') unter eine Schulter (35) des Rahmens (12,14) einsetzbar ist.

7. Zusatzscheibe nach einem der Ansprüche 1 bis 6, dadurch g e k e n n z e i c h n e t , daß die Zusatzscheibe (10,10') am Rahmen (12,14; 19,21) durch Stecken befestigbar ist.

8. Zusatzscheibe für ein Seitenfenster eines Fahrzeuges,
   insbesondere eines Kraftfahrzeuges, wobei das Seitenfenster eine Fensterscheibe mit einem nach vorne abgeschrägten Abschnitt und einen Rahmen zur Aufnahme
   der Fensterscheibe aufweist, dadurch g e k e n n z e i c h -
   n e t , daß die Zusatzscheibe (100) von einem oberen
   Holm (112) des Rahmens (112,114,116) gebildet ist,
   welcher breiter als ein vorderer Holm (116) des Rahmens
   (112,114,116) ausgebildet ist, derart, daß er einen
   oberen Abschnitt (118) des teilgeöffneten Fensters
   (120) abdeckt.

9. Zusatzscheibe nach einem der vorhergehenden Ansprüche,
   dadurch g e k e n n z e i c h n e t , daß die Zusatzscheibe
   (10,10',100) innenseitig der Fensterscheibe (22,122)
   angeordnet ist.

10. Zusatzscheibe nach einem der Ansprüche 1 bis 7, dadurch
    g e k e n n z e i c h n e t , daß an der Unterkante (24) der
    Zusatzscheibe (10,10') ein von der Fensterscheibe (22)
    abstehender Wulst (32) vorgesehen ist.

*FIG. 1*

17' 30' 37 10' 26 24 30 26 24 10

15

40

22 22

16'

28

FIG. 2

2/4

0170238

0170238

FIG. 4

FIG. 3

FIG. 5

FIG. 6

0170238

4/4